# EUROPEAN PATENT APPLICATION

(11) **EP 4 701 135 A1**
(43) Date of publication of application: **25.02.2026**
(21) Application number: 25194690.1
(22) Date of filing: 07.08.2025
(51) Int. Cl.: H04L 9/40, H04W 12/06, H04W 12/084

(54) **RESOURCE OWNER AUTHORIZATION FOR API INVOKER**

(30) Priority: 20.08.2024 IN 202441062651
(71) Applicant: Nokia Technologies Oy, 02610 Espoo (FI)
(72) Inventor: BOMMISETTY, Sireesha, 560077 Bangalore (IN); BRAHMAIAH, Topuri, 560037 Bangalore (IN); MAKHAM, Mallikarjunudu, 560064 Bangalore (IN); JERICHOW, Anja, 85567 Grafing bei München (DE); AMOGH, Niranth, 560045 Bangalore (IN); KHARE, Saurabh, 560043 Bangalore (IN); GIORDANO, Edoardo, 80335 Munich (DE)
(74) Representative: Samson & Partner Patentanwälte mbB

(57) **Abstract**

Example embodiments of the disclosure relate to methods, devices, apparatuses and computer readable storage medium for resource owner(s) authorization for an Application Programming Interface (API) invoker in Communication API Framework (CAPIF) Resource owner-aware Northbound API Access (RNAA) context. In a method, a first apparatus transmits, to a second apparatus, an access token request for authorization from one or more resource owners. The access token request comprises first information for accessing resources of the one or more resource owners, each of the one or more resource owners being different from a further resource owner associated with the first apparatus; and receive. Then, the first apparatus receives, from the second apparatus, an access token response comprising second information indicating a result of the authorization for accessing the resources of the one or more resource owners.

## Description

### FIELD

Various example embodiments of the present disclosure generally relate to the field of telecommunication and in particular, to methods, devices, apparatuses and computer readable storage medium for resource owner(s) authorization for an Application Programming Interface (API) invoker in Communication API Framework (CAPIF) Resource owner-aware Northbound API Access (RNAA) context.

### BACKGROUND

CAPIF provides a standardized approach for managing and securing APIs across different domains, particularly in telecommunication networks. It defines mechanisms for API discovery, invocation, and management, ensuring interoperability and security.

The RNAA may be considered as a model within the CAPIF that addresses the authorization and access control aspects of APIs, especially in scenarios where a resource owner is not the same as the entity invoking the API. The resource owner may be an entity that controls access to a specific resource. An API invoker may be an entity that wants to access the resource via an API. In RNAA, if the API invoker wants to access the resource of the resource owner, it needs to obtain authorization of the resource owner.

### SUMMARY

In a first aspect of the present disclosure, there is provided a first apparatus. The first apparatus comprises at least one processor; and at least one memory storing instructions that, when executed by the at least one processor, cause the first apparatus at least to: transmit, to a second apparatus, an access token request for authorization from one or more resource owners, wherein the access token request comprises first information for accessing resources of the one or more resource owners, each of the one or more resource owners being different from a further resource owner associated with the first apparatus; and receive, from the second apparatus, an access token response comprising second information indicating a result of the authorization for accessing the resources of the one or more resource owners.

In a second aspect of the present disclosure, there is provided a second apparatus. The second apparatus comprises at least one processor; and at least one memory storing instructions that, when executed by the at least one processor, cause the second apparatus at least to: receive, from a first apparatus, an access token request for authorization from one or more resource owners, wherein the access token request comprises first information for accessing resources of the one or more resource owners, each of the one or more resource owners being different from a further resource owner of the first apparatus; and transmit, to the first apparatus, an access token response comprising second information indicating a result of the authorization for accessing the resources of the one or more resource owners.

In a third aspect of the present disclosure, there is provided a method. The method comprises: transmitting, to a second apparatus, an access token request for authorization from one or more resource owners, wherein the access token request comprises first information for accessing resources of the one or more resource owners, each of the one or more resource owners being different from a further resource owner associated with the first apparatus; and receiving, from the second apparatus, an access token response comprising second information indicating a result of the authorization for accessing the resources of the one or more resource owners.

In a fourth aspect of the present disclosure, there is provided a method. The method comprises: receiving, from a first apparatus, an access token request for authorization from one or more resource owners, wherein the access token request comprises first information for accessing resources of the one or more resource owners, each of the one or more resource owners being different from a further resource owner of the first apparatus; and transmitting, to the first apparatus, an access token response comprising second information indicating a result of the authorization for accessing the resources of the one or more resource owners.

In a fifth aspect of the present disclosure, there is provided a first apparatus. The first apparatus comprises means for transmitting, to a second apparatus, an access token request for authorization from one or more resource owners, wherein the access token request comprises first information for accessing resources of the one or more resource owners, each of the one or more resource owners being different from a further resource owner associated with the first apparatus; and means for receiving, from the second apparatus, an access token response comprising second information indicating a result of the authorization for accessing the resources of the one or more resource owners.

In a sixth aspect of the present disclosure, there is provided a second apparatus. The second apparatus comprises means for receiving, from a first apparatus, an access token request for authorization from one or more resource owners, wherein the access token request comprises first information for accessing resources of the one or more resource owners, each of the one or more resource owners being different from a further resource owner of the first apparatus; and means for transmitting, to the first apparatus, an access token response comprising second information indicating a result of the authorization for accessing the resources of the one or more resource owners.

In a seventh aspect of the present disclosure, there is provided a computer readable medium. The computer readable medium comprises instructions stored thereon for causing an apparatus to perform at least the method according to the third aspect or the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling flow of a process of resource owner authorization for an API invoker according to some example embodiments of the present disclosure;
FIG. 3 illustrates a signaling flow of a process of resource owner authorization for an API invoker according to some example embodiments of the present disclosure;
FIG. 4 illustrates a flowchart of a method implemented at a first apparatus according to some example embodiments of the present disclosure;
FIG. 5 illustrates a flowchart of a method implemented at a second apparatus according to some example embodiments of the present disclosure;
FIG. 6 illustrates a simplified block diagram of a device that is suitable for implementing example embodiments of the present disclosure; and
FIG. 7 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

The following provides an introduction of how authorization works in CAPIF for RNAA. In general, the authorization function may obtain the necessary permission from a resource owner for allowing an API invoker (which is also denoted as "APIInvoker") to access a northbound API. RNAA may use token-based authorization using OAuth 2.0 framework with the following roles:
- The API invoker has the role of the OAuth 2.0 client.
- A CAPIF Core Function (CCF) has the role of the OAuth 2.0 authorization server, i.e., providing the access token used for RNAA.
- An API Exposing Function (AEF) has the role of the resource server.

The access tokens used for RNAA may contain the resource owner identifier (ID).

The resource owner may be a user of a UE or an owner of a subscription depending on use cases and regulations. The resource owner ID is specified as a global public subscription identifier (GPSI) of the corresponding UE if the resource is related to the UE.

The access token may include the resource owner ID and the API invoker ID. The resource owner ID may be the GPSI. The API invoker ID binds the token to the API invoker. To avoid privacy issues, GPSI should be different from Mobile Subscriber International ISDN (Integrated Services Digital Network) Number (MSISDN), Subscription Permanent Identifier (SUPI), etc.

The AEF may check if the token includes *resOwnerId* claim, which includes resource owner ID, to identify that it is a token used in RNAA.

The AEF may do the authorization check of the API invocation request for accessing the resources of the resource owner. The AEF checks the request against the token, including:
1) checking the token integrity and
2) checking whether the GPSI (if present) in the API invocation request is compliant with the resource owner ID in the access token. As the token includes resource owner ID, there is no need for additional UE authentication during API invocation. Moreover, the token should be able to restrict the API invoker to a specific resource (e.g., location, Quality of Service (QoS), Packet Data Network (PDN) connectivity status) of the resource owner.

For OAuth 2.0 flows involving redirection, authentication between the CCF/ Access and Usage Function (AUF) and the UE should be performed after the API Invoker redirects the UE to the CCF/AUF.

In case of an external AF (i.e., not the application on the UE) being the API invoker, for mutual authentication of API invoker AF and API exposing function, the conventional authentication methods may be reused.

For authorization, the following OAuth 2.0 flows may be used:
- Client credential flow,
- Authorization code flow, or
- Authorization code flow with Proof Key for Code Exchange (PKCE).

CCF may indicate the selected flows to the API invoker.

CCF may give service authorization which subscribers or users can use RNAA.

For selecting the authorization method, a conventional procedure may be used with the following RNAA specific additions. The API invoker may include in the Security Method Request the supported RNAA authorization flows. The CCF may determine the RNAA authorization flow based on the RNAA capabilities of the CCF, AEF, and API invoker. The API invoker may use the determined RNAA authorization flow in the subsequent communication with the CCF and AEF.

It is to be understood that in the above conventional solutions, only a UE accessing its own resources associated with the API invoker is considered if the API invoker is on the UE.

The following provides some discussions about authorization using OAuth client credential flow.

If client credential flow is used for authorization of the API invoker by the AEF, some procedures may be followed with the following profile:
- The access token request message may include the resource owner ID. (It is to be understood that if the API invoker is on a UE, the CCF obtains its GPSI during authentication.)
- The CCF may check whether the API invoker is entitled to consume the API and allowed to access the resources of the resource owner, by using authorization information available in the CCF.
- If the API invoker is on a UE, the CCF may check that the UE is accessing its own resources. If the API invoker is an AF not on a UE, the check is omitted.

The following provides some discussions about authorization using authorization code (optional PKCE) flow.

If authorization code flow, optionally with PKCE, is used by the AEF for authorization of the API invoker, some procedures may be followed with the following profile:
- The authorization token and/or authorization request may include the resource owner ID. (It is to be understood that if the API invoker is on the UE, the CCF obtains its GPSI during authentication. )
- The resource owner dynamically authorizes the API invoker to access the resource owner's resources.
- If the API invoker is on a UE, the CCF may check that the UE is accessing its own resources. The access token may contain the resource owner ID (i.e. GPSI) and the API invoker ID. If the API invoker is an AF not on a UE, the check is omitted.

Conventionally, an API Invoker in one UE (e.g., UE1) or Network may want to access the resources of other UEs (e.g., UE2 and UE3). For example, a gaming application (API invoker or APIInvoker) running in the UE (that is, the UE1) or Network may get the locations of other UEs, e.g., the UE2 and the UE3.

In some cases where a UE-deployed API invoker is accessing resources not owned by the UE, an API invoker may be either an application on a server or an application on a UE. The API invoker may be deployed in any of the following ways.
a. The API invoker may be deployed as AF on the UE (i.e. 3rd party application).
b. The API invoker may be deployed as AF on the UE supporting several other 3rd party applications deployed on the UE.
c. The API invoker may be deployed on the network as AF.

The scope of an API invoker on the UE (i.e., options a and b) in resource owner-aware northbound API access (RNAA) is limited to accessing its own resources only, i.e., resource owner is a user of the UE hosting the API invoker that may authorize the API access. In other words, only the UE accessing its own resource is considered if the API invoker is on the UE.

However, there are cases in which it is needed to support for API invoker(s) which are deployed on the UE accessing resources of other resource owners (users), e.g., consider some use cases and service level requirements, dealing with vehicle health monitoring in fleet management, in which an Application Client on the UE (e.g., UE1) could request access to fetch location and/or vehicle health issues to another user (e.g., UE2).

In the following for some issues so far not addressed solutions will be described. For example, whether (and how) RNAA can support the scenario where API invoker(s) which are deployed on the UE can access resources (hosted in the network) of other resource owners (users) (e.g., application client on the UE is fetching location of another UE or setting QoS for Protocol Data Unit (PDU) sessions of another UE).

In addition to the above, the conventional authentication and authorization mechanism enables the API Invoker(s) residing on a UE to access resources of a single UE. However, there is no provision in the existing access token request to support an API invoker to access a service (e.g., location, QoS) of multiple resource owners w.r.t multiple resources (e.g., a resource owner 1 (RO1)'s Device Location, a resource owner 2 (RO2)'s Device QoS Policy, etc.) in a single token request. In the access token request (e.g., AccessTokenReq) specified so far, all the services mentioned in the AccesstTokenReq are bound to a single resource owner (e.g., identified by resOwnerId).

Thus, the following issue also needs to be solved, that is, how to do service API authorization from multiple resource owners, i.e. service API authorization at a granularity of service, operation, resource, feature in association with multiple resource owners.

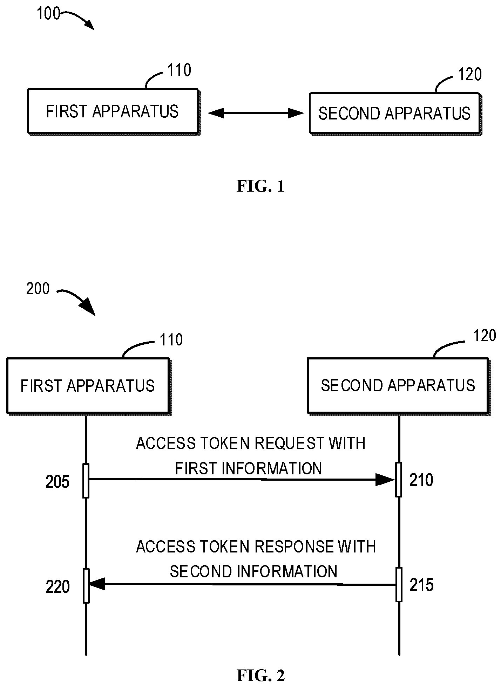

FIG. 1 illustrates an example communication environment 100 in which example embodiments of the present disclosure may be implemented. In the communication environment 100, there may be several devices/nodes, including but not limited to, a first apparatus 110 and the second apparatus 120.

In the following, for the purpose of illustration, some example embodiments are described with the first apparatus 110, which is for example a terminal device, e.g., a UE or a network device, e.g., a device that implements a certain network function. Specifically, the first apparatus 110 may implement an API invoker that may want to access resource(s) of one or more resource owners. In an example, the API invoker may have the role of the OAuth 2.0 client.

It is to be understood that each of the one or more resource owners is different from the resource owner associated with the first apparatus 110. That is, the API invoker wants to access resource(s) of a different resource owner.

Regarding a second apparatus 120, operations described in connection with the second apparatus 120 may be implemented at another device or apparatus, e.g., implementing a network function of a CCF.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

To solve the above or other potential issues, example embodiments of the present disclosure provide a solution related to authorization of accessing resource(s). In the solution, the first apparatus 110 transmits, to the second apparatus 120, an access token request for authorization from one or more resource owners. The access token request includes first information for accessing resources of one or more resource owners, e.g., resource owners. The resource owner associated with the first apparatus 110 is different from any of the resource owners. In other words, each of the resource owners is different from the resource owner associated with the first apparatus 110. Then, the first apparatus 110 receives, from the second apparatus 120, an access token response comprising second information indicating a result of the authorization for accessing the resources of the one or more resource owners.

Example embodiments of the present disclosure will be described in detail below with reference to the accompanying drawings.

FIG. 2 illustrates a signaling flow 200 of a process of resource owner authorization for an API invoker according to some example embodiments of the present disclosure. For the purposes of discussion, the signaling flow 200 will be discussed with reference to FIG. 1, for example, by using the first apparatus 110 and the second apparatus 120. The first apparatus 110 may be a terminal device, e.g., a UE, or a network device, and the second apparatus may implement a CAPIF Core Function (CCF).

In the signaling flow 200, the first apparatus 110 transmits (205), to the second apparatus 120, an access token request for authorization from one or more resource owners. The access token request includes first information for accessing resources of one or more resource owners. The first apparatus is different from any of the one or more resource owners.

In some example embodiments, the first apparatus 110 may implement an API invoker, and may be a terminal device, e.g., a UE, or a network device.

The resource owner may be a user of a UE or an owner of the subscription depending on the use case and regulations. The identifier of the resource owner (also referred to as resource owner ID) may be specified as a GPSI of the corresponding UE if the resource is related to a UE.

The first information may include, for example, but not limited to, an identifier of a resource owner in the one or more resource owners, at least one operation on a resource of the resource owner through a service, at least one feature associated with the service, at least one resource associated with the service, and/or the like.

In an example user case, the first apparatus 110, e.g., an API invoker in a terminal device (e.g., UE1), wants to access the location service of another terminal device (e.g., UE2) in CAPIF.

The service in this context is the Location Service provided by the network. This service enables the API Invoker in UE1 to obtain location-related information about UE2.

The resource refers to the specific data or entity that the Location Service operates on. For this scenario, the resource is the location data of UE2.

An operation is an action that the API Invoker performs on the resource through the service, for example, getting the current location of UE2 or subscribing to UE2 location data/updates.

A feature is a specific capability or functionality offered by the Location Service, often providing enhanced or specialized options for interacting with the resource, e.g., real-time tracking or geofencing.

In another example user case, the first apparatus 110, e.g., APIInvoker in UE1 wants to update the QoS policy for a gaming PDU session of UE2 in CAPIF.

The service here is the QoS Management Service provided by the network. This service allows the API Invoker in UE1 to manage and update the QoS settings such as such as bandwidth, latency, jitter, and priority associated with the PDU session of UE2.

The resource in this scenario is the PDU session of UE2 and is the target of the QoS policy update.

The operation is the specific action performed by the API Invoker to update the QoS policy for the PDU session. The operation here is "Update QoS Policy" to modify the QoS settings for the PDU session.

A feature is a specific functionality or enhancement provided by a QoS Management Service that allows for more sophisticated management of the QoS policies. Here the feature is "Dynamic QoS Adjustment" which ensures the QoS policy adapts to real-time network conditions.

That is, the authorization may be at a granular level of service, operation, feature and/or resource. In particular, in the first information, the service may include, but not limited to, a location, QoS, messaging, and/or internet of things (IoT) device management. The least one operation may include, but not limited to, creating, retrieving, updating, and/or deleting. The at least one feature may include, but not limited to, an enhanced location, geofencing, best effort QoS, burstable QoS, and/or guaranteed QoS. The at least one resource may include, but not limited to, a device location, a short message service (SMS), a QoS policy, and/or an IoT device.

In some example embodiments, the access token request (also referred to as AccessTokenReq) may have various forms. In an example implementation, the access token request may be implemented according to the following Table 1, when scope is used instead of the resOwnerId.

**Table 1**

| **Attribute name** | | **Data type** | **P** | **Cardinality** | **Description** | **Applicability** |
|---|---|---|---|---|---|---|
| grant_type | | string | M | 1 | This attribute shall contain the grant type as "client_credentials", or when the "RNAA" feature is supported, either "client_credentials" or "authorization_code". | |
| | | | | | (NOTE 3, NOTE 4) | |
| client_id | | string | M | 1 | This attribute shall contain the API invoker Identifier. | |
| | | | | | (NOTE 3) | |
| resOwnerld | | ResOwnerld | O | 0..1 | Contains the identifier of the resource owner. | RNAA |
| | | | | | This attribute shall be present only when the access token request is used for RNAA. | |
| | | | | | From Rel-19 onwards, if the attribute is not present, the scope may provide RNAA details instead, if granular authorization is needed. If the scope is used for granular access authorization as defined in the above scope, the resOwnerld shall not be present. | |
| client_secret | | string | O | 0..1 | This attribute when present shall contain the onboarding secret which is got during API invoker onboarding. | |
| | | | | | (NOTE 3) | |
| scope | | string | O | 0..1 | This attribute when present shall contain a list of AEF identifiers and its associated API names for which the access_token is authorized for use. | |
| | | | | | It takes the format of 3gpp#aefId1: apiName1:[ { "resOwnerlds":resOwnerld1, "operations": Retrieve, Create, "features": feature1, feature2, "resources":resource1, resource2 }, {"resOwnerlds": resOwnerld2, resOwnerld3 "operations": Retrieve, Create, "features": feature1, feature2, "resources":resource1, resource2 } ], apiName2: [ {"resOwnerlds": resOwnerld2, "operations": Update "features": feature1, feature2, "resources":resource1, resource2 }, {"resOwnerlds": resOwnerld2, "operations": Modify, "features": feature1, feature2, "resources":resource1, resource2 } ], apiNameZ:[ { "resOwnerlds":resOwnerld1, "operations": Create, "features": feature2, "resources":resource2 } ] | |
| | | | | | Using delimiter "#" after the discriminator "3gpp", ":" after AEF identifier, ":" after apiName "," between API names and ";" between the last API name of the previous AEF identifier and the next AEF identifier. (NOTE 2) | |
| | | | | | Example: '3gpp#aef-jiangsu-nanjing:3gpp-as-session-with-qos: [{"resOwnerlds": resOwnerld1, resOwnerld2, "operations": Modify, "features": BestEffort qos , "resources": QOS Policy}, { "resOwnerlds":resOwnerld3, "operations": Modify}], 3gpp-monitoring-event; aef-zhejiang-hangzhou:3gpp-cp-parameter-provisioning,3gpp-pfd-management' | |
| authCode | | string | C | 0..1 | Contains the authorization code. | RNAA |
| | | | | | This attribute shall be included only when the access token request is used for RNAA and the OAuth "authorization code" grant type is used. | |
| redirect_uri | | string | O | 0..1 | Contains the redirection URI that was used to obtain the authorization code provided within the "authCode" attribute. | RNAA |
| | | | | | This attribute may be included only when the access token request is used for RNAA and the OAuth "authorization code" grant type is used. | |
| | | | | | (NOTE 3) | |
| NOTE 1: | This data structure shall not be treated as a JSON object. It shall be treated as a key, value pair data structure to be encoded using x-www-urlencoded format as specified in clause 17.13.4.1 of W3C HTML 4.01 Specification [22]. | | | | | |
| NOTE 2: | The scope may contain more space-delimited strings which further add additional access ranges to the scope, the definition of those additional strings is out of the scope of the present document. | | | | | |
| NOTE 3: | The "grant_type", "client_id", "client_secret" and "redirect_uri" attributes do not follow the related naming convention defined in clause 7.2.1. These attributes are however kept as currently defined in this specification in order to keep them aligned with corresponding claims defined in IETF RFC 6749 [23] and for backward compatibility considerations. | | | | | |
| NOTE 4: | The enumeration value "client_credentials" or "authorization_code" of the "grant_type" attribute does not follow the related naming convention defined in clause 7.2.1. This enumeration is however kept as currently defined in this specification for backward compatibility considerations. | | | | | |

In the above Table 1, the first information is included in the attribute of "scope". As can be seen from Table 1, security aspects may be improved. Specifically, authorization from one or more resource owners for an API invoker may be at a granular level of service (e.g., location, QoS, messaging, IoT Device Management, etc.), operation (e.g., create, retrieve, update, delete, etc.), feature (e.g., enhanced location, geofencing, best effort QoS, burstable QoS, guaranteed QoS, etc.), resource (e.g., device location, SMS, QoS Policy, IoT device information, etc.), and so on.

It is to be understood that the scope enhancements are optional. If there are no scope enhancements in access token request, it is treated as no resource owner binding to an API or if the resOwnerId parameter is present with a valid value then the service API is bound to the resOwnerId.

The second apparatus 120 receives (210) the access token request and thus is aware that the first apparatus 110 would like to access references of the one or more resource owners. Afterwards, the second apparatus 120 transmits (215) an access token response comprising second information to the first apparatus 120. The second information indicates a result of the authorization for accessing the resources of the one or more resource owners. In some example embodiments, the second information may indicate whether the first apparatus 110 is authorized to access a resource of a resource owner which belongs to the one or more resource owners.

The first apparatus 110 receives (220) the access token response comprising second information from the second apparatus 120. Thus, the first apparatus 110 will understand it may access a resource of which resource owner among the one or more resource owners.

In some example embodiments, the second information may include, for example, but not limited to, at least one of: an identifier of a resource owner that authorizes the accessing, at least one operation on a resource of the resource owner through a service, at least one feature associated with the service, at least one resource associated with the service, and/or the like.

The second information may be included in various ways. In an example, it may be included in the access token response, for instance, in an attribute named "scope". Alternatively, the second information may be included in an access token within the access token response, for example, in an attribute named "access_token". In particular, if the second information is included in the attribute named "access_token", it may be included in an attribute named "scope" which is contained in the "access_token" as well.

The authorization from the one or more resource owners for the first apparatus 110 may be at a granular level of service, operation, feature and/or resource. In the second information, the service may include, but not limited to, a location, QoS, messaging, and/or IoT device management. The least one operation may include, but not limited to, creating, retrieving, updating, and/or deleting. The at least one feature may include, but not limited to, an enhanced location, geofencing, best effort QoS, burstable QoS, and/or guaranteed QoS. The at least one resource may include, but not limited to, a device location, a SMS, a QoS policy, and/or an IoT device.

In some example embodiments, the access token response (also referred to as AccessTokenRsp) may have various forms. In an example implementation, the access token response may be implemented according to the following Table 2. In the Table 2, the second information may be included in the attribute of "scope". As can be seen from Table 2, authorization from one or more resource owners for an API invoker may be at a granular level of service (location, QoS, messaging, IoT Device Management, etc.), operation (create, retrieve, update, delete), feature (enhanced location, geofencing, best effort QoS, burstable QoS, guaranteed QoS, etc.), resource (Device Location, SMS, QoS Policy, IoT Device), and so on.

**Table 2**

| **Attribute name** | **Data type** | **P** | **Cardinality** | **Description** |
|---|---|---|---|---|
| access_token | string | M | 1 | This IE shall contain JWS Compact Serialized representation of the JWS signed JSON object containing AccessTokenClaims (see clause 8.5.4.2.8). |
| | | | | (NOTE 2) |
| token_type | string | M | 1 | This IE shall contain the token type (i.e. "Bearer"). |
| | | | | (NOTE 2, NOTE 3) |
| expires_in | DurationSec | M | 1 | This IE when present shall contain the number of seconds after which the access_token is considered to be expired. |
| | | | | (NOTE 2) |
| scope | string | O | 0..1 | This attribute when present shall contain a list of AEF identifiers and its associated API names for which the access_token is authorized for use. |
| | | | | It takes the format of 3gpp#aefld1 : apiName1:[ { "resOwnerlds":resOwnerld1, "operations": Retrieve, Create, "features": feature1, feature2, "resources":resource1, resource2 }, {"resOwnerlds": resOwnerld2, resOwnerld3 "operations": Retrieve, Create, "features": feature1, feature2, "resources":resource1, resource2 } ], apiName2: [ {"resOwnerlds": resOwnerld2, "operations": Update "features": feature1, feature2, "resources":resource1, resource2 }, {"resOwnerlds": resOwnerld2, "operations": Modify, "features": feature1, feature2, "resources":resource1, resource2 } ], apiNameZ:[ { "resOwnerlds":resOwnerld1, "operations": Create, "features": feature2, "resources":resource2 } ] |
| | | | | Using delimiter "#" after the discriminator "3gpp", ":" after AEF identifier, ":" after apiName "," between API names and ";" between the last API name of the previous AEF identifier and the next AEF identifier. (NOTE 2) |
| | | | | Example: '3gpp#aef-jiangsu-nanjing:3gpp-as-session-with-qos: [{"resOwnerlds": resOwnerld1, resOwnerld2, "operations": Modify, "features": BestEffort qos , "resources": QOS Policy}, { "resOwnerlds":resOwnerld3, "operations": Modify}], 3gpp-monitoring-event; aef-zhejiang-hangzhou:3gpp-cp-parameter-provisioning,3gpp-pfd-management' |
| NOTE 1: | The scope may contain more space-delimited strings which further add additional access ranges to the scope, the definition of those additional strings is out of the scope of the present document. | | | |
| NOTE 2: | The "access_token", "token_type" and "expires_in" attributes do not follow the related naming convention defined in clause 7.2.1. These attributes are however kept as currently defined in this specification for backward compatibility considerations. | | | |
| NOTE 3: | The enumeration value "Bearer" of the "token_type" attribute does not follow the related naming convention defined in clause 7.2.1. This enumeration is however kept as currently defined in this specification for backward compatibility considerations. | | | |

In some example implementations, the "access_token" in the access token response, e.g., in the form of Table 2, may be implemented according to the following Table 3.

In the Table 3, the second information may be included in the attribute of "scope". As can be seen from Table 3, authorization from one or more resource owners for an API invoker may be at a granular level of service (location, QoS, messaging, IoT Device Management, etc.), operation (create, retrieve, update, delete), feature (enhanced location, geofencing, best effort QoS, burstable QoS, guaranteed QoS, etc.), resource (Device Location, SMS, QoS Policy, IoT Device), and so on.

It is to be understood that the scope enhancements are optional. If there are no scope enhancements in access token response, it is treated as no resource owner binding to an API or if the resOwnerId parameter is present with a valid value then the service API is bound to the resOwnerId.

**Table 3**

| Attribute name | | Data type | P | **Cardinality** | Description | **Applicabil**ity |
|---|---|---|---|---|---|---|
| iss | | string | M | 1 | This attribute shall contain the API invoker Identifier. | |
| scope | | string | M | 1 | This attribute when present shall contain a list of AEF identifiers and its associated API names for which the access_token is authorized for use. | |
| | | | | | It takes the format of 3gpp#aefId1: apiName1:[ { "resOwnerlds":resOwnerld1, "operations": Retrieve, Create, "features": feature1, feature2, "resources":resource1, resource2 }, {"resOwnerlds": resOwnerld2, resOwnerld3 "operations": Retrieve, Create, "features": feature1, feature2, "resources":resource1, resource2 } ], apiName2: [ {"resOwnerlds": resOwnerld2, "operations": Update "features": feature1, feature2, "resources":resource1, resource2 }, {"resOwnerlds": resOwnerld2, "operations": Modify, "features": feature1, feature2, "resources":resource1, resource2 } ], apiNameZ:[ { "resOwnerlds":resOwnerld1, "operations": Create, "features": feature2, "resources":resource2 } ] | |
| | | | | | Using delimiter "#" after the discriminator "3gpp", ":" after AEF identifier, ":" after apiName "," between API names and ";" between the last API name of the previous AEF identifier and the next AEF identifier. (NOTE 2) | |
| | | | | | Example: '3gpp#aef-jiangsu-nanjing:3gpp-as-session-with-qos: [{"resOwnerlds": resOwnerld1, resOwnerld2, "operations": Modify, "features": BestEffort qos , "resources": QOS Policy}, { "resOwnerlds":resOwnerld3, "operations": Modify}], 3gpp-monitoring-event; aef-zhejiang-hangzhou:3gpp-cp-parameter-provisioning,3gpp-pfd-management' | |
| exp | | DurationSec | M | 1 | This attribute shall contain the number of seconds after which the access_token is considered to be expired. | |
| resOwnerld | | ResOwnerld | O | 0..1 | Contains the identifier of the resource owner. | RNAA |
| | | | | | This attribute shall be present only when the access token request is used for RNAA. | |
| | | | | | From Rel-19 onwards, if the attribute is not present, the scope may provide RNAA details instead, if granular authorization is needed. If the scope is used for granular access authorization as defined in the above scope, the resOwnerld shall not be present. | |
| NOTE: | The scope may contain more space-delimited strings which further add additional access ranges to the scope, the definition of those additional strings is out of the scope of the present document. | | | | | |

In some example embodiments, upon receiving (220) the access token response, the first apparatus 110 may determine whether the access token response includes an access token indicating that the first apparatus 110 is authorized to access a resource of at least one of the one or more resource owners. If so, that is, a resource of at least one of the resource owners may be accessed, the first apparatus 110 may transmit a northbound API invocation request comprising at least one of the access token or the second information.

The northbound API invocation request may be transmitted to a third apparatus, which may be a network device that implements an Application Enablement Function (AEF), or other suitable devices. In some example embodiments, the device that implements an AEF may be also referred to as an AEF for purpose of discussion.

In view of the above, the first apparatus 110 can request access fine grain resource for other resource owners in the proposed way of authorization.

So far, there is no provision in the existing access token request to support an API invoker to access a service (e.g., location, QoS) of multiple resource owners with respect to multiple resources in a single token request. Some example embodiments propose solutions regarding how to do service API authorization from multiple resource owner.

Specifically, a first apparatus may transmit, to a second apparatus, an access token request for authorization from a plurality of resource owners. The access token request comprises first information for accessing resources of the plurality of resource owners. Then, the second apparatus transmits an access token response to the first apparatus and thus the first apparatus may receive the access token response, which includes second information indicating a result of the authorization for accessing the resources of the plurality of resource owners. In this way, resources of multiple resource owners may be accessed by the API invoker in a single access token request.

In some example implementations, it is assumed that users of three different UEs (for example, the UE1, the UE2 and the UE3) in the same operator domain are playing a game and the user of UE1 is ready to pay for better bandwidth of UE2 and UE3. To this end, the first apparatus 110 (e.g., the API invoker in the UE1) sends an access token request to the second apparatus (e.g., CCF) 120 requesting to modify the QoS service of the UE2 and the UE3, for example, by mentioning the resource owner IDs (e.g., GPSIs) of the UE2 and the UE3 along with QoS as service, operation as modification, feature as best effort QoS and resource as gaming traffic QoS Policy.

This may be represented in scope parameter of access token request in the following Table 4.

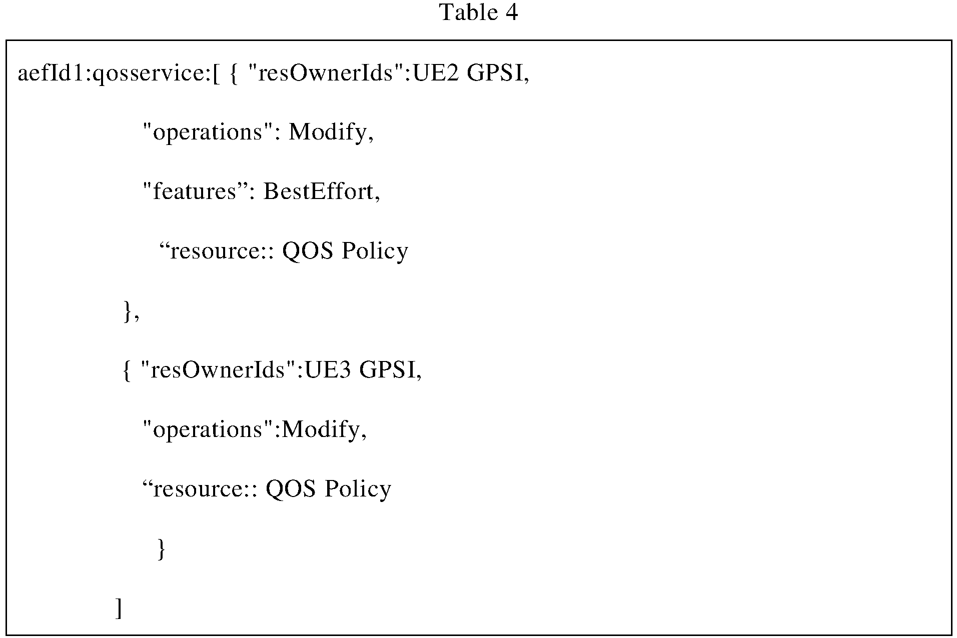

Upon receiving the access token request (e.g., in the form of AccessTokenReq illustrated in Table 1), the second apparats 120, e.g., the CCF, requests the authorization/consent from resource owners of the UE2 and the UE3. It may be possible that the resource owner of the UE2 might give the positive consent whereas the resource owner of the UE3 may not give the consent. In this case, access token response from CCF contains the authorization for the service access of only UE2. If both of the resource owners of UE2 and UE3 give the positive consents, the access token response contains the authorization which enables the API invoker to get the service from both the UE2 and the UE3. The access token response (e.g., in the form of AccessTokenRsp ) and the access token (e.g., in the form of AccessTokenClaims) may be also enhanced to the format as mentioned above in the AccessTokenReq. The above Table 2 and Table 3 have shown examples of the enhanced AccessTokenRsp and the enhanced AccessTokenClaims, respectively.

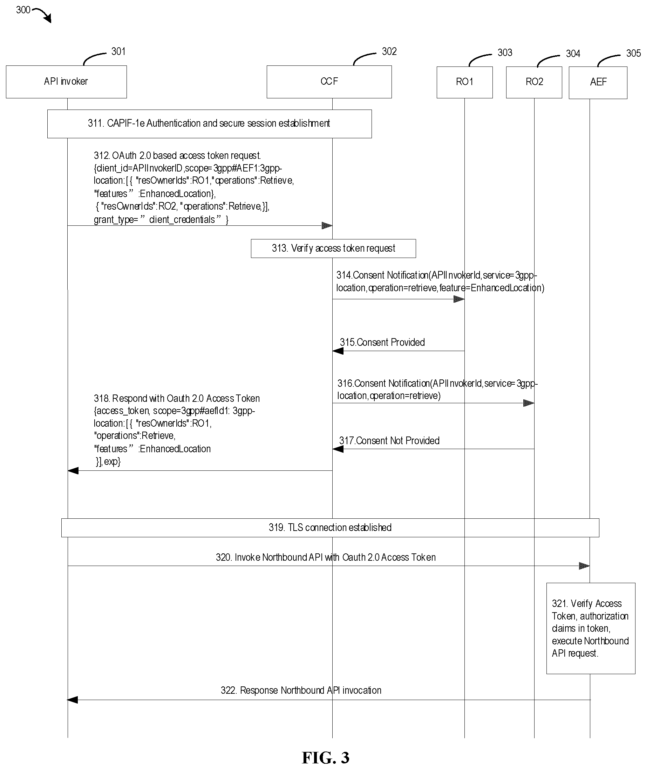

More details will be discussed with refence to example embodiments of FIG. 3, which illustrates a signaling flow 300 of a process of resource owner authorization for an API invoker according to some example embodiments of the present disclosure. The signaling flow 300 involves a plurality of devices or nodes, including, an API invoker 301, a CCF 302, a resource owner (also referred to as RO1) 303, another resource owner (also referred to as RO2) 304 and an AEF 305. The API invoker 301 may be implemented at the first apparatus 110 of FIG. 1 and the CCF 302 may be an example implementation of the second apparatus 120 of FIG. 1.

In the signaling flow 300, at 311, a CAPIF-1e authentication and secure session establishment is performed.

At 312, after successful establishment of Transport Layer Security (TLS) session over CAPIF-1e, the API invoker 311 may transmit an access token request, also referred to as a Access Token Request message or AccessTokenReq, to the CCF 302 with "scope" as discussed with respect to Table 1.

The access token request transmitted at 312 may include the first information as follows:

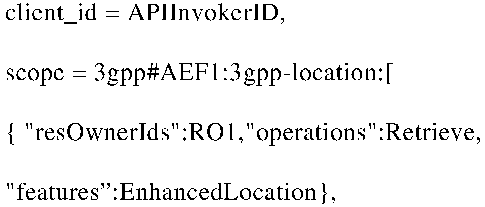

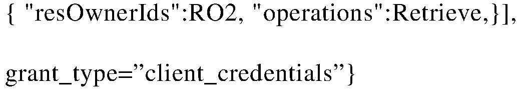

In this example, the API invoker 301 wants to access the resource of the resource owner RO1 303 through a service of "3gpp-location" along with an operation as Retrieve, and a feature as EnhancedLocation. As can be seen, the first information does not indicate the specific resource. In some cases, if the "resource" is absent from the first information, it may have default value(s). Thus, the CCF 302 may be aware what resource is to be accessed by the API invoker 301. Similarly, the operation and/or the feature may have default values. These default values may be predefined or preset in various ways, which are not detailed here.

At the same time, the API invoker 301 also wants to access the resource of the resource owner RO2 304 through the service of "3gpp-location" along with an operation as Retrieve and a grant_type of "client_credentials".

It is to be understood that the existing parameter resOwnerId parameter of AccessTokenReq may not be filled by the API invoker 311.

At 313, the CCF 302 may verify the Access Token Request message per OAuth 2.0 specification and as per the "scope" as discussed with respect to Table 1.

At 314, the CCF 302 notifies RO1 303 about the consent request, for example, by transmitting a consent notification. The consent notification may be in the form of Consent Notification (APIInvokerId, service=3gpp-location, operation=retrieve, feature=EnhancedLocation), where the APIInvokerId indicates the identifier of the API invoker 301.

At 315, the RO1 303 provides the consent.

At 316, the CCF 302 notifies RO2 304 about the consent request, for example, by transmitting a consent notification. The consent notification may be in the form of Consent Notification (APIInvokerId, service=3gpp-location, operation=retrieve).

Different from the RO1 303, at 317, the RO2 304 does not provide the consent.

At 318, the CCF may generate an access token with the scope containing service of only RO1 specific to the API invoker 301 and return it via an access toke response, also referred to as an Access Token Response message.

As shown the access toke response may be a response with OAuth 2.0 Access Token {access_token, scope=3gpp#aefId1: 3gpp-location:[

```
 { "resOwnerIds": RO1,
 "operations": Retrieve,
 "features": EnhancedLocation
 } ],exp}
```

That is, the access token response indicates that the API invoker 301 may access the RO1 303 through the service "3gpp-location" with the operation "Retrieve" and "feature" EnhancedLocation.

At 319, on CAPIF-2e, the API invoker 301 authenticates to the AEF 305 by establishing a TLS session with the API exposing function based on the authentication and authorization method.

At 320, with successful authentication to the AEF 305 on CAPIF-2e, the API invoker 301 may initiate invocation of a 3GPP northbound API with the AEF 305. The access token with new scope received from the CAPIF core may be sent along with the northbound API invocation request as per OAuth 2.0.

At 321, the API exposing function may validate the access token with new scope. The AEF 305 verifies the integrity of the access token by verifying the CCF 302 signature If validation of the access token is successful, the AEF 305 may verify the API invoker 301 's Northbound API invocation request against the authorization claims in access token, ensuring that the API Invoker 301 has access permission for the requested service API.

At 322, after successful verification of the access token and authorization claims of the API invoker 301, the requested northbound API may be invoked, and the appropriate response may be returned to the API invoker 301.

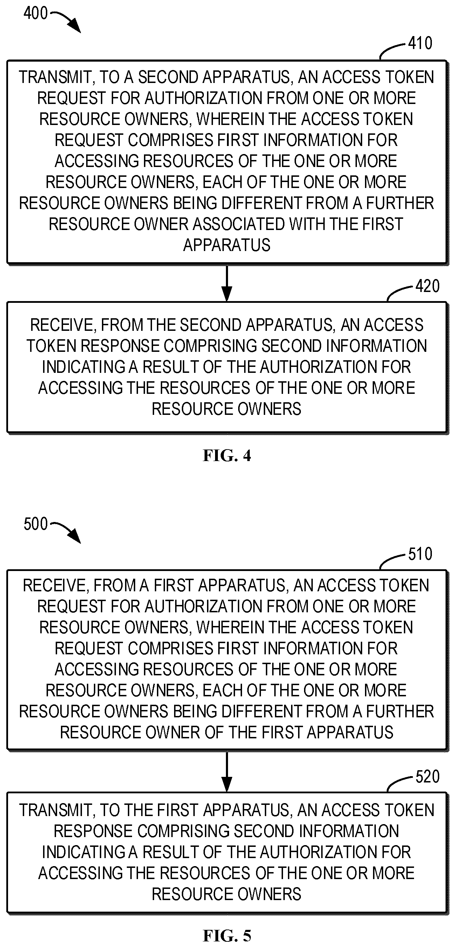

FIG. 4 shows a flowchart of an example method 400 implemented at a first apparatus in accordance with some example embodiments of the present disclosure. For the purpose of discussion, the method 400 will be described from the perspective of the first apparatus 110 in FIG. 1.

At block 410, the first apparatus 110 transmits, to the second apparatus 120, an access token request for authorization from one or more resource owners, wherein the access token request comprises first information for accessing resources of the one or more resource owners, each of the one or more resource owners being different from a further resource owner associated with the first apparatus.

At block 420, the first apparatus 110 receives, from the second apparatus 120, an access token response comprising second information indicating a result of the authorization for accessing the resources of the one or more resource owners.

In some example embodiments, the first information comprises at least one of: an identifier of a resource owner in the one or more resource owners, at least one operation on the resource of the resource owner through a service, at least one feature associated with the service, or at least one resource associated with the service.

In some example embodiments, the second information indicates whether the first apparatus is authorized to access a resource of a resource owner in the one or more resource owners.

In some example embodiments, the second information comprises at least one of: an identifier of a resource owner that authorizes the accessing, at least one operation on the resources of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the method 400 may further comprise: in response to the access token response comprising an access token indicating that the first apparatus is authorized to access a resource of at least one of the one or more resource owners, transmitting, to a third apparatus, a northbound API invocation request comprising at least one of the access token or the second information.

In some example embodiments, the third apparatus implements an API Exposing Function (AEF).

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

FIG. 5 shows a flowchart of an example method 500 implemented at a second apparatus in accordance with some example embodiments of the present disclosure. For the purpose of discussion, the method 500 will be de
scribed from the perspective of the second apparatus 120 in FIG. 1.

At block 510, the second apparatus 120 receives, from the first apparatus 110, an access token request for authorization from one or more resource owners, wherein the access token request comprises first information for accessing resources of the one or more resource owners, each of the one or more resource owners being different from a further resource owner of the first apparatus.

At block 520, the second apparatus 120 transmits, to the first apparatus 110, an access token response comprising second information indicating a result of the authorization for accessing the resources of the one or more resource owners.

In some example embodiments, the first information comprises at least one of: an identifier of a resource owner in the one or more resource owners, at least one operation on the resource of the resource owner through a service, at least one feature associated with the service, or at least one resource associated with the service.

In some example embodiments, the second information indicates whether the first apparatus is authorized to access a resource of a resource owner in the one or more resource owners.

In some example embodiments, the second information comprises at least one of: an identifier of a resource owner that authorizes the accessing, at least one operation on the resource of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the method 500 further comprises: verifying the access token request that comprises an identifier of the first apparatus; and transmitting, to each of the one or more resource owners, a first message comprising the identifier of the first apparatus and third information for accessing the resource owner, wherein the third information comprises at least one of: a service related to the resource owner, at least one operation on the service, at least one feature associated with the service, or at least one resource associated with the service.

In some example embodiments, the method 500 further comprises: receiving, from each of the one or more resource owners, a second message indicating whether the first apparatus is authorized to access a resource of the resource owner; and determining the result of the authorization for accessing the resources of the one or more resource owners based on the received second message.

In some example embodiments, the method 500 further comprises: in response to determining that at least one of the one or more resource owners authorizes the accessing, transmitting the access token response comprising an access token to the first apparatus.

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

In some example embodiments, a first apparatus capable of performing any of the method 400 (for example, the first apparatus 110 in FIG. 1) may comprise means for performing the respective operations of the method 400. The means may be implemented in any suitable form. For example, the means may be implemented in a circuitry or software module. The first apparatus may be implemented as or included in the first apparatus 110 in FIG. 1.

In some example embodiments, the first apparatus comprises means for transmitting, to a second apparatus, an access token request for authorization from one or more resource owners, wherein the access token request comprises first information for accessing resources of the one or more resource owners, each of the one or more resource owners being different from a further resource owner associated with the first apparatus; and means for receiving, from the second apparatus, an access token response comprising second information indicating a result of the authorization for accessing the resources of the one or more resource owners.

In some example embodiments, the first information comprises at least one of: an identifier of a resource owner in the one or more resource owners, at least one operation on the resource of the resource owner through a service, at least one feature associated with the service, or at least one resource associated with the service.

In some example embodiments, the second information indicates whether the first apparatus is authorized to access a resource of a resource owner in the one or more resource owners.

In some example embodiments, the second information comprises at least one of: an identifier of a resource owner that authorizes the accessing, at least one operation on the resources of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the first apparatus further comprises: means for in response to the access token response comprising an access token indicating that the first apparatus is authorized to access a resource of at least one of the one or more resource owners, transmitting, to a third apparatus, a northbound API invocation request comprising at least one of the access token or the second information.

In some example embodiments, the third apparatus implements an API Exposing Function (AEF).

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

In some example embodiments, the first apparatus further comprises means for performing other operations in some example embodiments of the method 400 or the first apparatus 110. In some example embodiments, the means comprises at least one processor; and at least one memory storing instructions that, when executed by the at least one processor, cause the performance of the first apparatus.

In some example embodiments, a second apparatus capable of performing any of the method 500 (for example, the second apparatus 120 in FIG. 1) may comprise means for performing the respective operations of the method 500. The means may be implemented in any suitable form. For example, the means may be implemented in a circuitry or software module. The second apparatus may be implemented as or included in the second apparatus 120 in FIG. 1.

In some example embodiments, the second apparatus comprises means for receiving, from a first apparatus, an access token request for authorization from one or more resource owners, wherein the access token request comprises first information for accessing resources of the one or more resource owners, each of the one or more resource owners being different from a further resource owner of the first apparatus; and means for transmitting, to the first apparatus, an access token response comprising second information indicating a result of the authorization for accessing the resources of the one or more resource owners.

In some example embodiments, the first information comprises at least one of: an identifier of a resource owner in the one or more resource owners, at least one operation on the resource of the resource owner through a service, at least one feature associated with the service, or at least one resource associated with the service.

In some example embodiments, the second information indicates whether the first apparatus is authorized to access a resource of a resource owner in the one or more resource owners.

In some example embodiments, the second information comprises at least one of: an identifier of a resource owner that authorizes the accessing, at least one operation on the resource of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the second apparatus further comprises: means for verifying the access token request that comprises an identifier of the first apparatus; and means for transmitting, to each of the one or more resource owners, a first message comprising the identifier of the first apparatus and third information for accessing the resource owner, wherein the third information comprises at least one of: a service related to the resource owner, at least one operation on the service, at least one feature associated with the service, or at least one resource associated with the service.

In some example embodiments, the second apparatus further comprises: means for receiving, from each of the one or more resource owners, a second message indicating whether the first apparatus is authorized to access a resource of the resource owner; and means for determining the result of the authorization for accessing the resources of the one or more resource owners based on the received second message.

In some example embodiments, the second apparatus further comprises: means for in response to determining that at least one of the one or more resource owners authorizes the accessing, transmitting the access token response comprising an access token to the first apparatus.

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

In some example embodiments, the second apparatus further comprises means for performing other operations in some example embodiments of the method 500 or the second apparatus 120. In some example embodiments, the means comprises at least one processor; and at least one memory storing instructions that, when executed by the at least one processor, cause the performance of the second apparatus.

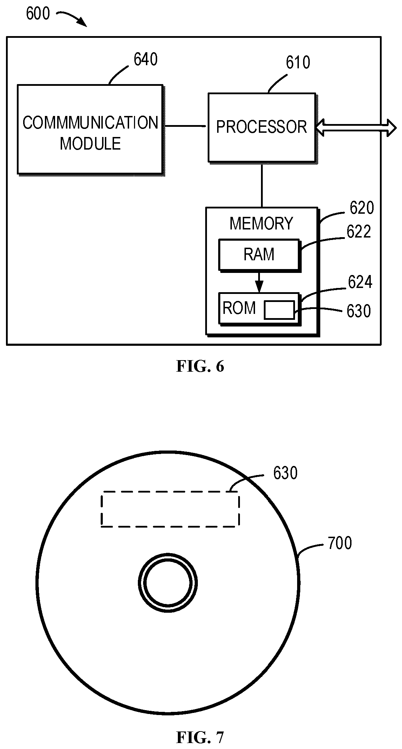

FIG. 6 is a simplified block diagram of a device 600 that is suitable for implementing example embodiments of the present disclosure. The device 600 may be provided to implement a communication device, for example, the first apparatus 110 or the second apparatus 120 as shown in FIG. 1. As shown, the device 600 includes one or more processors 610, one or more memories 620 coupled to the processor 610, and one or more communication modules 640 coupled to the processor 610.

The communication module 640 is for bidirectional communications. The communication module 640 has one or more communication interfaces to facilitate communication with one or more other modules or devices. The communication interfaces may represent any interface that is necessary for communication with other network elements. In some example embodiments, the communication module 640 may include at least one antenna.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The instructions of the program 630 may include instructions for performing operations/acts of some example embodiments of the present disclosure. The program 630 may be stored in the memory, e.g., the ROM 624. The processor 610 may perform any suitable actions and processing by loading the program 630 into the RAM 622.

The example embodiments of the present disclosure may be implemented by means of the program 630 so that the device 600 may perform any process of the disclosure as discussed with reference to FIG. 1 to FIG. 5. The example embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 7 shows an example of the computer readable medium 700 which may be in form of CD, DVD or other optical storage disk. The computer readable medium 700 has the program 630 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In a first aspect of the present disclosure, there is provided a first apparatus. The first apparatus comprises at least one processor; and at least one memory storing instructions that, when executed by the at least one processor, cause the first apparatus at least to: transmit, to a second apparatus, an access token request for authorization from a plurality of resource owners, wherein the access token request comprises first information for accessing resources of the plurality of resource owners; and receive, from the second apparatus, an access token response comprising second information indicating a result of the authorization for accessing the resources of the plurality of resource owners.

In a second aspect of the present disclosure, there is provided a second apparatus. The second apparatus comprises at least one processor; and at least one memory storing instructions that, when executed by the at least one processor, cause the second apparatus at least to: receive, from a first apparatus, an access token request for authorization from a plurality of resource owners, wherein the access token request comprises first information for accessing resources of the plurality of resource owners; and transmit, to the first apparatus, an access token response comprising second information indicating a result of the authorization for accessing the resources of the plurality of resource owners.

In a third aspect of the present disclosure, there is provided a method. The method comprises: transmitting, to a second apparatus, an access token request for authorization from a plurality of resource owners, wherein the access token request comprises first information for accessing resources of the plurality of resource owners; and receiving, from the second apparatus, an access token response comprising second information indicating a result of the authorization for accessing the resources of the plurality of resource owners.

In a fourth aspect of the present disclosure, there is provided a method. The method comprises: receiving, from a first apparatus, an access token request for authorization from a plurality of resource owners, wherein the access token request comprises first information for accessing resources of the plurality of resource owners; and transmitting, to the first apparatus, an access token response comprising second information indicating a result of the authorization for accessing the resources of the plurality of resource owners.

In a fifth aspect of the present disclosure, there is provided a first apparatus. The first apparatus comprises means for transmitting, to a second apparatus, an access token request for authorization from a plurality of resource owners, wherein the access token request comprises first information for accessing resources of the plurality of resource owners; and means for receiving, from the second apparatus, an access token response comprising second information indicating a result of the authorization for accessing the resources of the plurality of resource owners.

In a sixth aspect of the present disclosure, there is provided a second apparatus. The second apparatus comprises means for receiving, from a first apparatus, an access token request for authorization from a plurality of resource owners, wherein the access token request comprises first information for accessing resources of the plurality of resource owners; and means for transmitting, to the first apparatus, an access token response comprising second information indicating a result of the authorization for accessing the resources of the plurality of resource owners.

In a seventh aspect of the present disclosure, there is provided a computer readable medium. The computer readable medium comprises instructions stored thereon for causing an apparatus to perform at least the method according to the third aspect or the fourth aspect.

In some example embodiments, a first apparatus transmits, to a second apparatus, an access token request for authorization from a plurality of resource owners, wherein the access token request comprises first information for accessing resources of the plurality of resource owners.

The first apparatus receives, from the second apparatus, an access token response comprising second information indicating a result of the authorization for accessing the resources of the plurality of resource owners.

In some example embodiments, the first information comprises at least one of: an identifier of a resource owner in the plurality of resource owners, at least one operation on the resource of the resource owner through a service, at least one feature associated with the service, or at least one resource associated with the service.

In some example embodiments, the second information indicates whether the first apparatus is authorized to access a resource of a resource owner in the plurality of resource owners.

In some example embodiments, the second information comprises at least one of: an identifier of a resource owner that authorizes the accessing, at least one operation on the resources of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the first apparatus may in response to the access token response comprising an access token indicating that the first apparatus is authorized to access a resource of at least one of the plurality of resource owners, transmit, to a third apparatus, a northbound API invocation request comprising at least one of the access token or the second information.

In some example embodiments, the third apparatus implements an API Exposing Function (AEF).

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

In addition, in some example embodiments, a second apparatus receives, from a first apparatus, an access token request for authorization from a plurality of resource owners, wherein the access token request comprises first information for accessing resources of the plurality of resource owners.

The second apparatus transmits, to the first apparatus, an access token response comprising second information indicating a result of the authorization for accessing the resources of the plurality of resource owners.

In some example embodiments, the first information comprises at least one of: an identifier of a resource owner in the plurality of resource owners, at least one operation on the resource of the resource owner through a service, at least one feature associated with the service, or at least one resource associated with the service.

In some example embodiments, the second information indicates whether the first apparatus is authorized to access a resource of a resource owner in the plurality of resource owners.

In some example embodiments, the second information comprises at least one of: an identifier of a resource owner that authorizes the accessing, at least one operation on the resource of the resource owner through a service, at least one feature associated with the service, or at least one resource associated with the service.

In some example embodiments, the service comprises at least one of a location, Quality of Service (QoS), messaging, or Internet of Things (IoT) device management; or wherein the least one operation comprises at least one of creating, retrieving, updating, deleting, or wherein the at least one feature comprises at least one of an enhanced location, geofencing, best effort QoS, burstable QoS, guaranteed QoS, or wherein the at least one resource comprises at least one of a device location, a short message service (SMS), a QoS policy, or an IoT device information.

In some example embodiments, the second information is comprised in the access token response, or wherein the second information is comprised in an access token within the access token response.

In some example embodiments, the second apparatus may further verify the access token request that comprises an identifier of the first apparatus; and transmit, to each of the plurality of resource owners, a first message comprising the identifier of the first apparatus and third information for accessing the resource owner, wherein the third information comprises at least one of: a service related to the resource owner, at least one operation on the service, at least one feature associated with the service, or at least one resource associated with the service.

In some example embodiments, the second apparatus may receive, from each of the plurality of resource owners, a second message indicating whether the first apparatus is authorized to access a resource of the resource owner; and determine the result of the authorization for accessing the resources of the plurality of resource owners based on the received second message.

In some example embodiments, the second apparatus may in response to determining that at least one of the plurality of resource owners authorizes the accessing, transmitting the access token response comprising an access token to the first apparatus.

In some example embodiments, the first apparatus implements an Application Program Interface (API) invoker.

In some example embodiments, the first apparatus comprises a terminal device or a network device, and the second apparatus comprises a Communication API Framework (CAPIF) Core Function (CCF).

In some example embodiments, the first apparatus comprises means for transmitting, to a second apparatus, an access token request for authorization from a plurality of resource owners, wherein the access token request comprises first information for accessing resources of the plurality of resource owners; and means for receiving, from the second apparatus, an access token response comprising second information indicating a result of the authorization for accessing the resources of the plurality of resource owners.

In some example embodiments, the second apparatus comprises means for receiving, from a first apparatus, an access token request for authorization from a plurality of resource owners, wherein the access token request comprises first information for accessing resources of the plurality of resource owners; and means for transmitting, to the first apparatus, an access token response comprising second information indicating a result of the authorization for accessing the resources of the plurality of resource owners.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus, comprising:
at least one processor; and
at least one memory storing instructions that, when executed by the at least one processor, cause the first apparatus at least to:
transmit, to a second apparatus, an access token request for authorization from one or more resource owners, wherein the access token request comprises first information for accessing resources of the one or more resource owners, each of the one or more resource owners being different from a further resource owner associated with the first apparatus; and
receive, from the second apparatus, an access token response comprising second information indicating a result of the authorization for accessing the resources of the one or more resource owners.

2. The first apparatus of claim 1, wherein the first information comprises at least one of:
an identifier of a resource owner in the one or more resource owners,
at least one operation on the resource of the resource owner through a service,
at least one feature associated with the service, or
at least one resource associated with the service.

3. The first apparatus of claim 1 or 2, wherein the second information indicates whether the first apparatus is authorized to access a resource of a resource owner in the one or more resource owners.

4. The first apparatus of claim 3, wherein the second information comprises at least one of:
an identifier of a resource owner that authorizes the accessing,
at least one operation on the resources of the resource owner through a service,
at least one feature associated with the service, or
at least one resource associated with the service.

5. The first apparatus of any of claims 2 to 4, wherein the service comprises at least one of a location, Quality of Service, QoS, messaging, or Internet of Things, IoT, device management; or
wherein the least one operation comprises at least one of creating, retrieving, updating, deleting, or
wherein the at least one feature comprises at least one of an enhanced location, geofencing, best effort QoS, burstable QoS, guaranteed QoS, or
wherein the at least one resource comprises at least one of a device location, a short message service, SMS, a QoS policy, or an IoT device information.

6. The first apparatus of any of claims 1 to 5, wherein the second information is comprised in the access token response, or
wherein the second information is comprised in an access token within the access token response.

7. The first apparatus of any of claims 1 to 6, wherein the first apparatus is caused to:
in response to the access token response comprising an access token indicating that the first apparatus is authorized to access a resource of at least one of the one or more resource owners, transmit, to a third apparatus, a northbound API invocation request comprising at least one of the access token or the second information.

8. The first apparatus of claim 7, wherein the third apparatus implements an API Exposing Function, AEF.

9. The first apparatus of any of claims 1 to 8, wherein the first apparatus implements an Application Program Interface, API, invoker.

10. The first apparatus of any of claims 1 to 9, wherein the first apparatus comprises a terminal device or a network device, and the second apparatus comprises a Communication API Framework, CAPIF, Core Function, CCF.

11. A second apparatus comprising:
at least one processor; and
at least one memory storing instructions that, when executed by the at least one processor, cause the second apparatus at least to:
receive, from a first apparatus, an access token request for authorization from one or more resource owners, wherein the access token request comprises first information for accessing resources of the one or more resource owners, each of the one or more resource owners being different from a further resource owner of the first apparatus; and
transmit, to the first apparatus, an access token response comprising second information indicating a result of the authorization for accessing the resources of the one or more resource owners.

12. A method, comprising:
transmitting, to a second apparatus, an access token request for authorization from one or more resource owners, wherein the access token request comprises first information for accessing resources of the one or more resource owners, each of the one or more resource owners being different from a further resource owner associated with the first apparatus; and
receiving, from the second apparatus, an access token response comprising second information indicating a result of the authorization for accessing the resources of the one or more resource owners.

13. A method comprising:
receiving, from a first apparatus, an access token request for authorization from one or more resource owners, wherein the access token request comprises first information for accessing resources of the one or more resource owners, each of the one or more resource owners being different from a further resource owner of the first apparatus; and
transmitting, to the first apparatus, an access token response comprising second information indicating a result of the authorization for accessing the resources of the one or more resource owners.

14. A computer readable medium comprising instructions stored thereon for causing an apparatus at least to perform the method of any of claims 12 or 13.
